# EUROPEAN PATENT SPECIFICATION

(11) **EP 2 321 479 B1**
(45) Date of publication and mention of the grant of the patent: **14.11.2012**
(21) Application number: 09780283.9
(22) Date of filing: 07.07.2009
(51) Int. Cl.: E03F 1/00, E03B 1/04

(54) **GRAVITY FLOW WASTEWATER DISTRIBUTION DEVICE**
SCHWERKRAFTSTRÖMUNGSABWASSERVERTEILVORRICHTUNG
DISPOSITIF DE DISTRIBUTION D'EAUX USÉES À ÉCOULEMENT PAR GRAVITÉ

(30) Priority: 07.07.2008 IE 20080557
(43) Date of publication of application: 18.05.2011
(73) Proprietor: The Provost, Fellows, Foundation Scholars, & the other members of Board, of the College of the Holy & Undiv. Trinity of Queen Elizabeth near Dublin, Dublin 2 (IE)
(72) Inventor: GILL, Laurence William, Dublin 7 (IE); O'LUANAIGH, Niall David, Co. Kildare (IE); PATEL, Titiksh, Dublin 9 (IE)
(74) Representative: Reedy, Orlaith
(86) International application number: PCT/EP2009/058631
(87) International publication number: WO 2010/003964

(56) References cited:
- WO-A-2008/064420
- CN-A- 1 986 985
- FR-A- 2 615 751
- FR-A- 2 630 472
- FR-A- 2 755 620
- GB-A- 190 927 885
- US-A- 3 843 976
- US-A- 5 269 911

## Description

The present invention relates to on-site treatment systems for wastewater effluent. More particularly, the invention relates to a device, as described in the preamble of claim 1, for providing even distribution of on-site wastewater effluent across a subsoil percolation area by gravity flow.

### Background to the Invention

In remote areas of land, dwellings are often not served by sewer networks for removing wastewater. Accordingly, the onus is on such landowners to provide their own on-site effluent treatment systems. These systems can take the form of a septic tank or a package treatment plant, where the wastewater is partially treated before it is discharged to the subsoil, through which it percolates and receives further natural degradation before meeting the water table.

One well-known method of discharge to the subsoil is by a pressurised (pumped) system. However, pressurised systems can be expensive both to install and to run, and also require regular maintenance.

A less expensive alternative for discharge of the effluent can be provided by a gravity flow system. Typically these systems consist of an ad-hoc arrangement of pipework through which the wastewater effluent percolates and receives further natural degradation before meeting the water table. More formal gravity distribution devices include stilling chamber devices with or without adjustable weirs, or two-way splitter devices, with or without upstream baffles.

One problem often associated with such gravity systems is that they fail to work consistently under the sporadic and very low flow hydraulic loading regime that is typically discharged from on-site treatment systems, which makes them particularly sensitive to solids and grease, which inevitably accumulate on the weirs after a period of time.

The even distribution of effluent across a percolation area is a critical design factor for such gravity systems. Where the effluent is not evenly distributed, one trench or section of the percolation area can become overloaded in terms of hydraulic and /or pollutant loading, preventing the bacteria in the soil from effectively treating the pollutants. The effluent can thus move too fast through the subsoil, which can ultimately lead to pollution of the groundwater. It can also result in the backing up of the effluent and surface ponding, which can cause surface water pollution, as well as posing a serious health risk to children and animals.

The standard means of evenly distributing the effluent from a gravity system is by dividing the effluent flow between a series of parallel pipes positioned at a depth in the subsoil, with each pipe having holes located along their length. However, in practice, the even distribution of effluent between these parallel pipes can be difficult to achieve, due to the fact that normal gravity flow conditions are sporadic in nature, and the discharge tends to be at very low flow rates from the on-site treatment systems.

The other critical design factor in the distribution of the wastewater relates to head loss. It will be appreciated that head loss should be minimised across a gravity distribution device, in order to maximise the depth of unsaturated soil available for final treatment of the effluent. In areas where the water table is high, this can place a tight constraint on moving the water from a dwelling, to the septic tank, and then into the trenches by means of the gravity distribution system.

### Object of the Invention

It is therefore an object of the present invention to provide an improved system for distributing wastewater effluent to the subsoil by gravity flow.

### Summary of the Invention

The present invention comprises a fluid distribution device comprising a reservoir, a pair of buckets, and a plurality of outlet pipes for receiving the fluid discharged into the reservoir. In this embodiment, each bucket is pivotable under gravity between a first receiving position in which it can receive fluid and a second discharge position in which it can release fluid contained therein into the reservoir and the buckets arranged such that when one bucket is located in the first receiving position, the other bucket is located in the second discharge position. The outlet pipes are divided into two groups of equal number located at opposite sides of the reservoir, with each group arranged to receive the fluid from one of the buckets when in the discharge position, wherein each outlet pipe in a group receives an equal portion of the discharged fluid from its associated bucket.

This ensures that the fluid is distributed evenly over each of the outlet pipes and ensures an even loading regime. By the use of two buckets, the distribution device can discharge half as often as those prior art devices which only use one bucket of the same volume. This results in a longer resting period between discharges, and thus an improved pollutant breakdown.

Preferably, a plurality of directing means for channelling the fluid discharged from a bucket such that an equal portion of the discharged fluid is received by each outlet pipe in the group of outlet pipes associated with the bucket.

This further ensures that the fluid is distributed evenly over each of the outlet pipes associated with the bucket which is being discharged and further ensures an even loading regime by channelling an equal amount of fluid to each of said pipes. Meanwhile, no fluid is received by the group of outlet pipes which are associated with the bucket which is in the receiving position.

A gradient may be provided between the discharge position of a bucket and its associated group of outlet pipes, ensuring that fluid is directed away from the bucket in the discharge position and toward the outlet pipes.

The following devices and features thereof are known from the prior art.

CN-A- 1 986 985 discloses a fluid distribution device comprising a reservoir buckets pivotable under gravity between a first position where it can receive fluid and a second position where it can discharge fluid. It also reveals an outlet pipe for receiving the fluid discharged into the reservoir.

Document CN-A-1986986 is considered to represent the closest prior art. This document discloses the features described in the preamble of claim 1.

WO 2008/064420 A discloses an installation for the intermediate holding and storage of sewage and effluent comprising a sealable housing having an inlet for receiving effluent, an outlet for discharging effluent and a pivotally mounted holding reservoir.

FR-A-2 755 620 discloses an installation for percolation filtration of waste water.

FR-A-2 630 472 discloses a water flushing device with a pivotable bucket.

FR-A-2 615 751 discloses a tilting or pivoting septic tank.

US-A-3 843 976 discloses a basin for the collection of excreta which automatically pivots when sufficient waste water has collected sending the collected excreta to a sewer system

GB 27885 A discloses a means for raising sewage and other liquids by compressed air.

US-A-5 269 911 discloses a domestic sewage system consisting of a primary treatment vessel and a secondary vessel with a filtration unit in between.

None of the above documents, either alone or in combination, discloses the arrangement of the present application. In particular, none discloses a plurality of outlet pipes being divided into two groups of equal number located at opposite ends of the reservoir. None discloses groups of outlet pipes arranged to receive fluid from a bucket in a discharge position wherein each outlet pipe in a group receives an equal portion of the discharged fluid from its associated bucket.

The outlet pipes in each group may be located at an equal spacing from each other in the reservoir.

This ensures that the fluid is distributed evenly over each outlet pipe.

Suitably, the pair of buckets are pivotable about a common axis.

This provides a simple mechanism for ensuring that when one bucket moves into the discharge position, the second bucket moves into a receiving position and vice versa.

A dosage adjustment means may also be provided.

This allows for the device to be calibrated so that each bucket discharges at a greater or lesser volume, allowing the device to cater for the flow rate specific to an individual site.

In an embodiment, the dosage adjustment means may be operable when the device is in situ.

This allows for adjustment of the dosage if the device has been installed at an angle of inclination rather than perfectly level, or if the flow rate characteristics of a site have changed.

In one embodiment the dosage adjustment means comprises a screw.

In an alternative embodiment the dosage adjustment means allows for the height of the pivot to be adjusted.

The present invention also provides a wastewater system comprising a wastewater treatment source, a device as substantially described herein arranged to receive the fluid output from the wastewater treatment source and percolation means for distributing fluid from the outlet pipes across a percolation area.

The percolation means may comprise a plurality of percolation pipes, with each outlet pipe being connected to one of the percolation pipes.

### Brief Description of the Drawings

**Figure 1** is a plan view of an on-site gravity-based distribution device according to the present invention.
**Figure 2** is a cross-sectional side-view of the device of Figure 1, taken along transect **II-II.**
**Figure 3** is a cross-sectional side view of the device of Figure 1, taken along transect **III-III;**
**Figure 4** is a is a cross-sectional side-view of the device including a dosage adjustment means; and
**Figure 5** shows graphs of the performance of a device having four outlets when it is installed level in the ground, and at angles of inclination about both its longitudinal and transverse axes

### Detailed Description of the Drawings

The present invention will now be described with reference to the accompanying drawings.

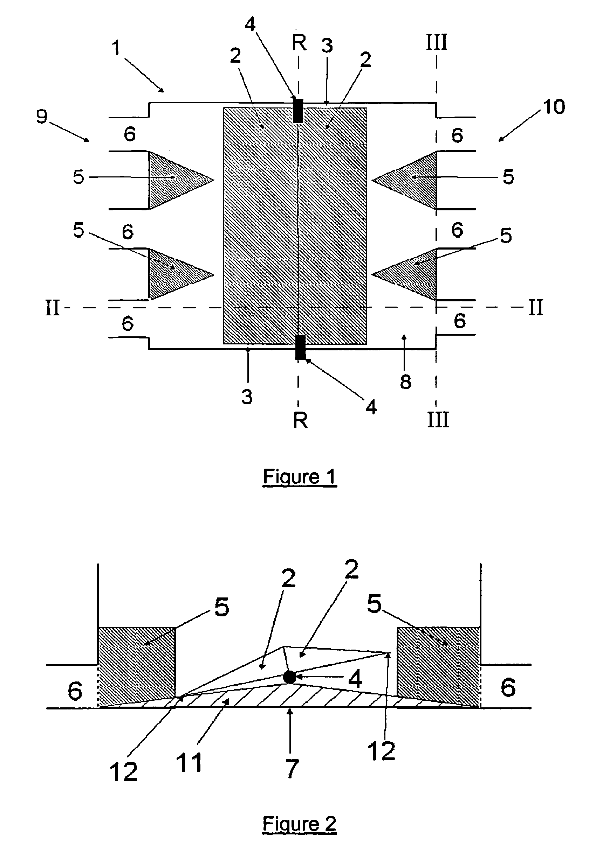

The device 1 comprises a pair of containers or buckets 2 for receiving fluid in the form of wastewater effluent from an on-site treatment source, such as a septic tank. In the described embodiment of the invention, the containers take the form of two v-shaped buckets. These buckets are pivotably attached to a common base 7 along their shared longitudinal axis R, in order to enable them to be pivoted between a first receiving position, in which they can receive wastewater, and a second discharge position, in which position they can release the wastewater contained therein for distribution to the subsoil. The two buckets are located in a reservoir 8, and arranged so that one bucket can pivot under gravity towards one side of the device, while the other bucket can pivot under gravity towards the opposite side of the device as shown in Figure 2. When one bucket is located in the first receiving position, the other bucket is located in the second discharge position. In this way, one of the buckets is always available to receive the wastewater effluent. Due to the pivotable movement of these buckets, they are known as tipping buckets. In the described embodiment of the invention, a pivot rod 4 provides the pivotable attachment of the buckets 2 to the base 7. The pivot rod 4 is mounted to the underside of the two buckets at their common axis R, with either end of the rod affixed to the adjacent sidewall 3 of the device 1 by a connecting means (not shown). In one embodiment of the invention, the connecting means are provided by stainless steel roller bearings, in order to minimise frictional losses.

A plurality of outlet pipes 6 of substantially identical diameter are arranged to receive the flow of wastewater discharged from the buckets into the reservoir 8 when the buckets are in their discharge position. The outlet pipes 6 are divided into two groups of equal number and of equal spacing. One group of outlet pipes are located in the side 9 of the device perpendicular to the sidewalls 3, to receive the wastewater discharged when one of the buckets pivots towards this side of the device, while the other group of outlet pipes 6 are located at the opposite side 10 of the device, to receive the wastewater discharged from the other bucket into the reservoir 8.

A ramp 11 is provided at least between the point adjacent where the lip 12 of each bucket 2 is located when in the discharge position and the ports of its associated group of outlet pipes 6. These ramps provide the necessary gradient in order to prevent any solid build up under the normal effluent discharge velocities after the buckets pivot. In the embodiment shown, the gradient is 1 to 20. A plurality of directing means in the form of vertical weirs 5 are located on each of the ramps 11 in order to channel the flow of effluent being discharged from each bucket to be divided equally among the group of outlet pipes 6 located at the base of each ramp 11. Each outlet pipe 6 is coupled to a percolation pipe (not shown) for distributing the wastewater effluent evenly across a percolation field. In the described embodiment, the percolation pipes are provided in a parallel arrangement.

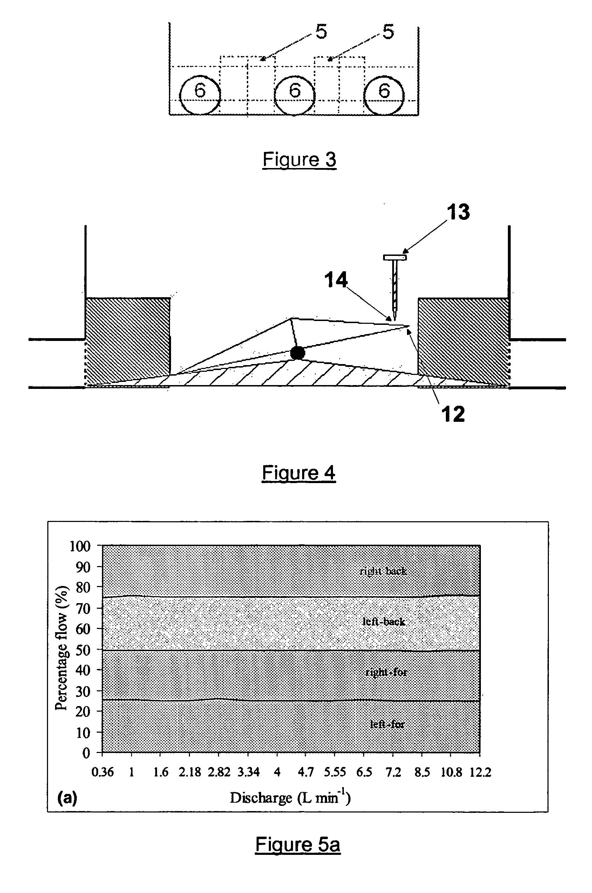

In one embodiment of the device, a dosage adjustment means is also provided. This enables the volume or dose of wastewater discharged when a bucket is in the discharge position to be adjusted. The adjustment means can be operated in situ as desired. In the embodiment of Figure 4, the dosage adjustment means is provided by a screw 13, which extends downwardly towards the top surface of a bucket and is positioned such that the tip 14 of the screw 13 makes contact with the surface adjacent to the lip 12 of the bucket when the other bucket is in the discharge position. By rotating the screw 13, the relative spacing between the screw 13 and the bucket may be adjusted. It will be appreciated that this spacing determines the extent of pivotal movement that can occur when the other bucket moves into the discharge position, as once the bucket which is in the receiving position makes contact with the tip 14 of the screw 13, it prevents the other bucket from pivoting any further, and thus causes it to reach its discharge position limit, as is clear from Figure 4. This mechanism could also be designed so that the screw could alternatively be located at the top, side or bottom of the bucket. It will be appreciated that any other suitable form of dosage adjustment means could equally well be used. For example, the volume adjustment could be provided by a mechanism which adjusts the height of the pivot instead.

In use, the device 1 is located so as to receive the outlet flow from the on-site treatment source. This is typically provided by a connection pipe coupled between the on-site treatment source and the device. The effluent flow from the on-site treatment source will then trickle from the connection pipe into that bucket 2 which is located in the first receiving position, so that the bucket 2 gradually fills up with a volume of wastewater. The bucket 2 will continue to fill with wastewater until it becomes unstable, due to the volume of wastewater contained therein, at which point the instability causes the bucket 2 to pivot about the base 7 until it reaches the second discharge position. Once it reaches the discharge position, the wastewater contained in the bucket 2 will discharge into the reservoir 8 towards one side of the device 1 via its associated ramp 11. The wastewater flows down the ramp 11 and is equally divided between the group of outlet pipes 6 located adjacent the base of the ramp 11, under the direction of the vertical weirs 5. The equally divided portions of wastewater flow through each of the outlet pipes 6, and then into the percolation pipes to which each outlet pipe is connected, in order to obtain an even distribution of effluent loading across the percolation field. The evenly distributed effluent then percolates through the soil, which provides a natural attenuation of the pollutants as the effluent moves through the unsaturated subsoil to the water table.

Due to the arrangement of the buckets 2 in the device 1 explained above, while one bucket 2 is in the discharge position, the other bucket 2 is in the receiving position, and thus is receiving wastewater effluent flow from the on-site treatment source until it also reaches a point of instability. This bucket 2 then pivots to the opposite side of the device 1 to that side to which the other bucket 2 pivoted. The wastewater is then discharged from the bucket 2 into the reservoir 8 and distributed in the same manner as previously described with respect to the other bucket 2, that is by flowing down its associated ramp 11 and being equally divided by the vertical weirs 5 between the outlet pipes 6 located adjacent the base of the ramp 11.

It will be appreciated that the volume of effluent discharged per bucket and the head loss across the device can be determined for different geometries of bucket, and the parameters optimised in order to minimise the head loss, while at the same time produce a significant resting time between wastewater doses. It should be noted that it is generally found that it is preferable to distribute higher doses of effluent onto the fixed film bacteria which break down the effluent, and to have a longer resting period, than having steady short pulses of low doses of effluent. In addition, the gradient of the ramps can be designed to prevent any solid build up under the normal effluent discharge velocities once the buckets are in the discharge position. In one embodiment of the device, where each group of outlet pipes comprises two outlet pipes so as to form a four way split, the preferred dimensions to produce a 900ml volume dose per tip are: base length: 300mm, base breadth: 150mm, with a resulting 0.15m head loss across the device. In another embodiment of the device, where each group of outlet pipes comprises three outlet pipes so as to form a six way split, the preferred dimensions to produce a 900ml volume dose per tip are: base length: 450mm, base breadth: 150mm, with a resulting 0.15m head loss across the device.

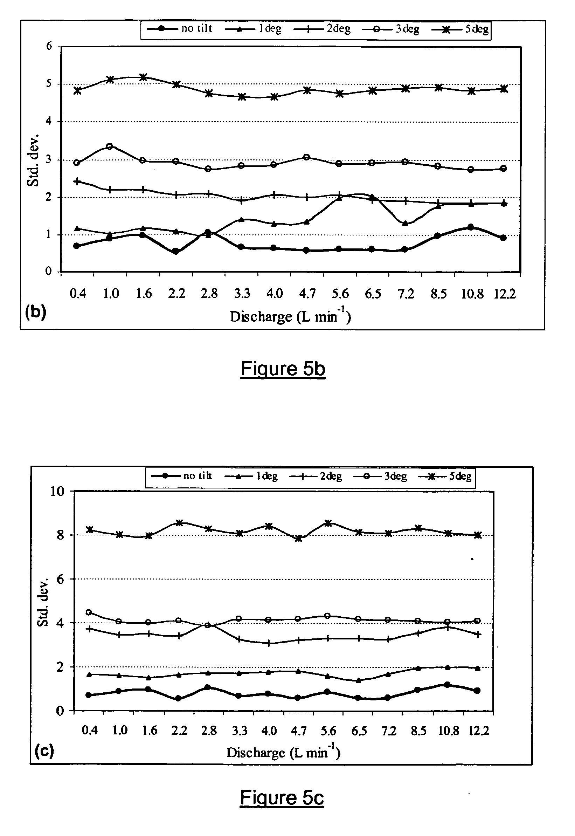

The optimised distribution device of the present invention has been tested at different flow rates and at different inclination angles. This was achieved by collecting the volume of water, normalising it with respect to the total volume for a particular flow rate and calculating the standard deviation based on the percentage flow through each outlet. Figure 5 shows graphs of the performance of a device having four outlets when it is installed level in the ground (Figure 5a), and at angles of inclination about both its longitudinal and transverse axes (Figures 5b and 5c respectively). It can be seen from the graphs that the performance of the device is independent of flow rate. Furthermore, the device has a standard deviation of less than one when the distribution device is level in the ground, and it can be seen that its performance is only slightly affected when off level about either axis. This is in contrast to many conventional distribution devices.

The present invention provides a number of advantages over prior art arrangements. The device operates by gravity flow (i.e. no pumping) and thus has no energy requirements. The combination of the pivotable buckets and the vertical weirs enables small, sporadic gravity flows to be divided into a number of equal parts, and thus provide even distribution of effluent into a number of parallel pipes across a percolation area, with the resulting reduction in risk of both ground and surface water pollution.

Furthermore, as noted above, the geometry of the bucket is designed so as to minimise the head loss (typically only 150 mm) but to produce a significant resting time between wastewater doses. The design of the device therefore enables a periodic discharge to be provided (as opposed to a continuous low flow). This maximises the use of unsaturated subsoil for treatment of the percolating effluent, in order to provide the most preferable environment for pollutant breakdown. This has particularly advantageous effects in areas with high water tables or with shallow unsaturated subsoil depths. It has also been found to be beneficial for the biomat in the trenches, as it allows periods of rest, and thus aeration. The gradient is also designed to prevent any solid build up under the normal effluent discharge velocities.

Also as noted above, the present invention performs more robustly than many conventional distribution devices in that its performance is not as sensitive to flow rates, and neither does its performance deteriorate significantly when it is installed off-level in the ground.

The device also has been designed such that it is self-cleaning, in contrast to prior art gravity systems. Furthermore, as the incoming flow is split into two opposing directions, the on-site installation for the pipework needed to discharge to the parallel trenches is easier than prior art systems. In addition, the pivoting mechanism ensures that solids on the weirs do not affect low flow wastewater effluent velocities.

The robustness of the device is further enhanced by the means of adjusting the volume of wastewater discharged by the device. This means also has the added flexibility of enabling the adjustment to be performed in situ.

Due to the design of the distribution device of the present invention, it may be manufactured in various different sizes, depending on the required number of outlet pipes the effluent needs to be split into, while still retaining the same frequency and volume of discharge. This is in contrast to may prior art distribution devices, where more than one device is required if the effluent is to be split in more than four ways. In one embodiment of the device, the device is manufactured by robust plastic, so as to keep the device relatively light. This has been found to aid installation and levelling on site.

The words "comprises/comprising" and the words "having/including" when used herein with reference to the present invention are used to specify the presence of stated features, integers, steps or components but does not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention that are, for brevity, described in the context of a single embodiment, may also be provided separately or in any suitable sub-combination, according to the appended claims.

## Claims

1. A fluid distribution device (1) comprising:
a reservoir (8);
a pair of buckets (2), each bucket pivotable under gravity between a first receiving position in which it can receive fluid and a second discharge position in which it can release fluid contained therein into the reservoir; the buckets arranged such that when one bucket is located in the first receiving position, the other bucket is located in the second discharge position; charaterised by:
a plurality of outlet pipes (6) for receiving the fluid discharged into the reservoir (8), the outlet pipes (6) divided into two groups of equal number located at opposite sides of the reservoir (8), each group arranged to receive the fluid from one of the buckets (2) when in the discharge position, wherein each outlet pipe (6) in a group receives an equal portion of the discharged fluid from its associated bucket.

2. The device (1) of claim 1, further comprising a plurality of directing means for channelling the fluid discharged from a bucket (2) such that an equal portion of the discharged fluid is received by each outlet pipe (6) in the group of outlet pipes (6) associated with the bucket (2).

3. The device (1) of claim 1 or claim 2, wherein a gradient is provided between the discharge position of a bucket (2) and its associated group of outlet pipes (6).

4. The device of any of the preceding claims, wherein the outlet pipes (6) in each group are located at an equal spacing from each other in the reservoir (8).

5. The device (1) of any of the preceding claims, wherein the pair of buckets (2) are pivotable about a common axis.

6. The device (1) of any of the preceding claims, wherein the device further comprises a dosage adjustment means.

7. The device (1) of Claim 6, wherein the dosage adjustment means is operable when the device is in situ.

8. The device (1) of Claim 6 or Claim 7, wherein the dosage adjustment means comprises a screw (13).

9. The device (1) of Claim 6 or Claim 7, wherein the dosage adjustment means allows for the height of the pivot to be adjusted.

10. A wastewater system comprising:
a wastewater treatment source;
the device (1) as claimed in any of the preceding claims arranged to receive the fluid output from the wastewater treatment source; and
percolation means for distributing fluid from the outlet pipes (6) across a percolation area.

11. The system of claim 10, wherein the percolation means comprises a plurality of percolation pipes, with each outlet pipe (6) being connected to one of the percolation pipes.

## Patentansprüche

1. Ein Fluidverteilungsgerät (1) aufweisend:
einen Behälter (8);
ein Paar Schaufeln (2), jede Schaufel unter Schwerkraft drehbar zwischen einer ersten aufnehmenden Position, in der sie Fluid aufnehmen kann, und einer zweiten Entladeposition, in der sie darin enthaltenes Fluid in den Behälter abladen kann;
die Schaufeln derart eingerichtet, dass, wenn die eine Schaufel in die erste aufnehmende Position verlagert ist, die andere Schaufel in die zweite Entladeposition verlagert ist,
**dadurch gekennzeichnet, dass**
mehrere Auslassrohre (6) zum Aufnehmen des in den Behälter entladenen Fluids vorgesehen sind, die Auslassrohre (6) aufgeteilt in zwei Gruppen mit gleicher Anzahl und an einander gegenüberliegenden Seiten des Behälters (8) angeordnet, jede Gruppe eingerichtet, das Fluid von der einen in die Entladeposition verlagerte Schaufel aufzunehmen, wobei jedes Auslassrohr (6) in einer Gruppe eine gleiche Menge des entladenen Fluids von seiner zugeordneten Schaufel aufnimmt.

2. Das Gerät (1) nach Anspruch 1,
ferner aufweisend mehrere Leitmittel zum Kanalisieren des von einer Schaufel (2) entladenen Fluids derart, dass eine gleiche Menge des entladenen Fluids durch jede Auslassröhre (6) in der Gruppe der mit der Schaufel (2) in Verbindung stehenden Auslassröhren (6) aufgenommen ist.

3. Das Gerät (1) nach Anspruch 1 oder 2,
wobei eine Neigung zwischen der Entladeposition einer Schaufel (2) und seiner zugeordneten Gruppe von Auslassröhren (6) bereitgestellt ist.

4. Das Gerät (1) nach einem der vorhergehenden Ansprüche,
wobei die Auslassröhren (6) in jeder Gruppe in dem Behälter (8) voneinander gleich beabstandet angeordnet sind.

5. Das Gerät (1) nach einem der vorhergehenden Ansprüche,
wobei das Paar Schaufeln (2) über eine gemeinsame Achse drehbar ist.

6. Das Gerät (1) nach einem der vorhergehenden Ansprüche,
wobei das Gerät ferner ein Mittel zur Dosierungsanpassung aufweist.

7. Das Gerät (1) nach Anspruch 6,
wobei das Mittel zur Dosierungsanpassung betriebsbereit ist, wenn das Gerät vor Ort ist.

8. Das Gerät (1) nach Anspruch 6 oder 7,
wobei das Mittel zur Dosierungsanpassung eine Schraube (13) aufweist.

9. Das Gerät (1) nach Anspruch 6 oder 7,
wobei das Mittel zur Dosierungsanpassung eine Höhenjustage des Drehpunktes erlaubt.

10. Ein Abwassersystem aufweisend:
eine Abwasseraufbereitungsquelle;
das Gerät (1), wie in einem der vorhergehenden Ansprüche beansprucht, eingerichtet, die Fluidabgabe aus der Abwasseraufbereitungsquelle aufzunehmen; und
Perkolationsmittel zum Verteilen des Fluids aus den Auslassrohren (6) über eine Perkolationsfläche.

11. Das System nach Anspruch 10,
wobei das Perkolationsmittel mehrere Perkolationsröhren aufweist, wobei jede Auslassröhre (6) mit einer der Perkolationsröhren verbunden ist.

## Revendications

1. Dispositif de distribution de fluide (1) comprenant :
un réservoir (8) ;
une paire de godets (2), chaque godet étant pivotable par gravité entre une première position de réception dans laquelle il peut recevoir le fluide et une seconde position d'évacuation dans laquelle il peut libérer le fluide qui y est contenu dans le réservoir ; les godets étant agencés de sorte que lorsqu'un godet est situé dans la première position d'évacuation, l'autre godet est situé dans la seconde position de réception ; **caractérisé par** :
une pluralité de tuyaux d'écoulement (6) destinée à recevoir le fluide évacué dans le réservoir (8), les tuyaux d'écoulement (6) étant divisés en deux groupes de nombre égal situés à des côtés opposés du réservoir (8), chaque groupe étant agencé pour recevoir le fluide en provenance de l'un des godets (2) lorsque celui-ci est en position d'évacuation, dans lequel chaque tuyau d'écoulement (6) dans un groupe reçoit une part égale du fluide évacué en provenance de son godet associé.

2. Dispositif (1) selon la revendication 1, comprenant en outre une pluralité de moyens de direction destinés à canaliser le fluide évacué en provenance d'un godet (2) de sorte qu'une part égale du fluide évacué est reçue par chaque tuyau d'écoulement (6) dans le groupe de tuyaux d'écoulement (6) associé au godet (2).

3. Dispositif (1) selon la revendication 1 ou la revendication 2, dans lequel une pente est prévue entre la position d'évacuation d'un godet (2) et son groupe associé de tuyaux d'écoulement (6).

4. Dispositif selon l'une quelconque des revendications précédentes, dans lequel les tuyaux d'écoulement (6) dans chaque groupe sont situés à un espacement égal l'un de l'autre dans le réservoir (8).

5. Dispositif (1) selon l'une quelconque des revendications précédentes, dans lequel la paire de godets (2) est pivotable autour d'un axe commun.

6. Dispositif (1) selon l'une quelconque des revendications précédentes, dans lequel le dispositif comprend en outre un moyen d'ajustement de dosage.

7. Dispositif (1) selon la revendication 6, dans lequel le moyen d'ajustement de dosage est utilisable lorsque le dispositif est *in situ*.

8. Dispositif (1) selon la revendication 6 ou la revendication 7, dans lequel le moyen d'ajustement de dosage comprend une vis (13).

9. Dispositif (1) selon la revendication 6 ou la revendication 7, dans lequel le moyen d'ajustement de dosage permet l'ajustement de la hauteur du pivot.

10. Système d'évacuation des eaux usées comprenant :
une source de traitement des eaux usées ;
le dispositif (1) selon l'une quelconque des revendications précédentes agencé pour recevoir la sortie de fluide en provenance de la source de traitement des eaux usées ; et
un moyen de percolation destiné à distribuer le fluide depuis les tuyaux d'écoulement (6) sur une zone de percolation.

11. Système selon la revendication 10, dans lequel le moyen de percolation comprend une pluralité de tuyaux de percolation (2), chaque tuyau d'écoulement (6) étant raccordé à l'un des tuyaux de percolation.
